# EUROPÄISCHE PATENTSCHRIFT

(11) **EP 3 414 597 B1**
(45) Veröffentlichungstag und Bekanntmachung des Hinweises auf die Patenterteilung: **13.10.2021**
(21) Anmeldenummer: 17704743.8
(22) Anmeldetag: 10.02.2017
(51) Int. Cl.: G01S 13/42, G01S 13/90, G01S 13/89

(54) **VERFAHREN UND ANORDNUNG ZUR HOCHGENAUEN POSITIONIERUNG EINER ROBOTERGEFÜHRTEN INTERAKTIONSVORRICHTUNG MITTELS RADAR**
METHOD AND ARRANGEMENT FOR THE HIGHLY ACCURATE POSITIONING OF A ROBOT-GUIDED INTERACTION APPARATUS BY MEANS OF RADAR
PROCÉDÉ ET SYSTÈME DE POSITIONNEMENT TRÈS PRÉCIS D'UN DISPOSITIF D'INTERACTION ROBOTISÉ AU MOYEN D'UN RADAR

(30) Priorität: 11.02.2016 DE 102016202052
(43) Veröffentlichungstag der Anmeldung: 19.12.2018
(73) Patentinhaber: Fraunhofer-Gesellschaft zur Förderung der angewandten Forschung e.V., 80686 München (DE)
(72) Erfinder: LANG, Stefan, 87600 Kaufbeuren (DE)
(74) Vertreter: Gagel, Roland
(86) Internationale Anmeldenummer: PCT/EP2017/052993
(87) Internationale Veröffentlichungsnummer: WO 2017/137558

(56) Entgegenhaltungen:
- DE-A1- 10 216 023
- DE-A1-102005 000 732
- DE-A1-102008 041 602
- DE-A1-102011 083 408
- DE-A1-102013 014 626

## Beschreibung

### Technisches Anwendungsgebiet

Die vorliegende Erfindung betrifft ein Verfahren zur Positionierung einer robotergeführten Interaktionsvorrichtung gegenüber einem Objekt, bei dem mehrere Radarantennen so in die Interaktionsvorrichtung integriert oder an der Interaktionsvorrichtung angebracht werden, dass mit den Radarantennen wenigstens ein Bereich eines Interaktionsraumes der Interaktionsvorrichtung abtastbar ist. Die Erfindung betrifft auch eine Anordnung zur Durchführung des vorgeschlagenen Verfahrens.

In der Robotik besteht eine der wichtigsten Aufgaben im automatisierten Greifen respektive Aufnehmen eines Objekts mit einem Greifwerkzeug. Bei diesem Vorgang spielt die hochgenaue Positionierung des Greifwerkzeugs gegenüber dem Objekt eine wesentliche Rolle. Um diese Positionsgenauigkeit erreichen zu können, sind wiederum hochpräzise Sensoren erforderlich. Dies gilt oft auch für andere Interaktionsvorrichtungen, beispielsweise zur robotergeführten Bearbeitung eines Objektes.

Weiterhin besteht die Notwendigkeit, die Interaktionsvorrichtung kollisionsfrei an das Objekt heranzuführen. Hierzu ist auch die Kenntnis der direkten Umgebung der Interaktionsvorrichtung bei der Navigation oder Positionierung dieser Interaktionsvorrichtung sehr wichtig.

### Stand der Technik

Ein Verfahren und eine Vorrichtung zur hochgenauen Positionierung eines durch einen Roboter geführten Werkzeugs ist beispielsweise aus der DE 102012208252 A1 bekannt. Bei diesem Verfahren wird ein virtuelles mechanisches Modell der in diesem Falle mehrere miteinander verbundene Roboter umfassenden Anlage erstellt. Die Gelenkpositionen der Robotergelenke werden erfasst und unter Berücksichtigung des virtuellen mechanischen Modells der Anlage eine Abweichung zwischen einer Soll- und einer Ist-Position des vom Roboter geführten Werkzeugs berechnet. Auf Basis der berechneten Positionsabweichung wird dann die Position des Werkzeugs entsprechend korrigiert.

Aus der DE 19541880 A1 sind eine Vorrichtung und ein Verfahren zum Entnehmen von Teilen mit stationären Roboter- oder Handlingsystemen von bewegten Teilträgern bekannt. Bei dem Verfahren wird für eine lineare Greifwerkzeugbewegung die Entfernung zum Objekt mit einem für die Entfernungsmessung geeigneten Sensor gemessen, um daraus die Annäherung des Greifwerkzeugs an das Objekt abzuleiten. Als Beispiele für geeignete Techniken zur berührungslosen Entfernungsmessung wird hier unter anderem auch Radar genannt.

Die DE 102007045381 A1 beschreibt ein System und Verfahren zur Erfassung und/oder Erkennung von Objekten bei robotergestützten Produktions- und Fertigungsprozessen. Bei diesem System werden über einem Fließband, auf dem sich die Objekte bewegen, mehrere Radarsensoren angeordnet, die die jeweilige Position und Lage der Objekte radarbasiert erfassen und die erhaltenen Daten der Steuereinrichtung des Roboters zuführen. Die Interaktion mit den Objekten erfolgt dann auf Basis dieser Daten. Es wird auch vorgeschlagen, mit den Radarsensoren ein 3D-Abbild der Szene mit dem jeweiligen Objekt zu gewinnen.

Die US 2015/0032252 A1 beschreibt ein Verfahren sowie ein System zum Aufgreifen und Ablegen von Stückgut mit Hilfe eines mobilen Roboters. Der Roboter weist einen beweglichen Greifarm mit einem Endeffektor auf, der über einen oder mehrere Sensoren gesteuert wird. Für die Feinabstimmung des Endeffektors kann ein Sensor auch direkt am Endeffektor angebracht sein. Als Beispiele für Sensoren sind 3D-Tiefenkameras, Farb- und Schwarzweiß-Kameras, Laser-Entfernungsmesseinrichtungen, Sonar-Einrichtungen und Radareinrichtungen angeführt.

Die DE 10 2005 000 732 A1 beschreibt ein funkbasiertes Ortungssystem auf Basis mehrerer ortsfester Transponder, mit deren Hilfe die Position eines mobilen Elementes, beispielsweise des Greifers eines Roboterarms, erfasst werden kann. Der Greifer kann dann auf Basis dieser Daten positioniert werden. Zur Verbesserung der Positioniergenauigkeit ist ein Sekundärradar am Greifer des Roboterarms angebracht, mit dem die Lage der Transponder über eine Radarbildgebung bestimmt wird.

Aus der DE 10 2008 041 602 A1 ist ein mehrgliedriger Roboterarm bekannt, der auf mehreren Gliedern Abstandssensoren aufweist.

Die Aufgabe der vorliegenden Erfindung besteht darin, ein Verfahren und eine Anordnung zur Positionierung einer robotergeführten Interaktionsvorrichtung anzugeben, die eine hochgenaue Positionierung gegenüber einem Objekt ermöglicht und sich in nahezu beliebigen Umgebungen ohne Umbauten am jeweiligen Einsatzort einsetzen lässt.

### Darstellung der Erfindung

Die Aufgabe wird mit dem Verfahren und der Anordnung gemäß den Patentansprüchen 1 und 6 gelöst. Vorteilhafte Ausgestaltungen des Verfahrens sowie der Anordnung sind Gegenstand der abhängigen Patentansprüche oder lassen sich der nachfolgenden Beschreibung sowie dem Ausführungsbeispiel entnehmen.

Bei dem vorgeschlagenen Verfahren werden mehrere Radarantennen so in die Interaktionsvorrichtung integriert oder an der Interaktionsvorrichtung angebracht, dass mit den Radarantennen wenigstens ein Bereich eines Interaktionsraumes der Interaktionsvorrichtung abtastbar ist. Die Radarantennen werden dabei in jedes bewegliche oder starre Element der Interaktionsvorrichtung integriert oder an diesem Element angebracht, welches für die Positionierung wichtig ist. Jede dieser Radarantennen weist eine definierte Position in der Interaktionsvorrichtung sowie eine definierte Strahlcharakteristik auf, so dass die geometrischen Verhältnisse der Antennenposition und Ausleuchtung der Szene für jede Radarantenne bekannt sind. Die Radarantennen werden durch eine geeignete Elektronik zur Aussendung und zum Empfang von Radarsignalen angesteuert. Aus den empfangenen Radarsignalen wird für jede Radarantenne eine Entfernung oder Distanz zu einem im Interaktionsraum befindlichen Objekt bestimmt und eine 3D-Abbildung der mit den Radarantennen erfassten Szene generiert. Aufgrund der bekannten Position und Charakteristik der Radarantennen ist aus den erfassten Daten die räumliche Lage und Orientierung der Interaktionsvorrichtung gegenüber dem Objekt mit hoher Genauigkeit bekannt und wird zur hochgenauen Positionierung der Interaktionsvorrichtung eingesetzt. Die Elektronik kann dabei in einer einzelnen Elektronikeinheit zusammengefasst oder auch auf mehrere Elektronikeinheiten verteilt sein. Die Elektronik übermittelt der Robotersteuerung die ermittelten Daten. Je nach Art des Roboters wird durch die Robotersteuerung zum Beispiel der Roboterarm und auch die Bewegung der einzelnen Glieder des als Interaktionsvorrichtung eingesetzten mehrgliedrigen Greifwerkzeugs angesteuert.

Zur Erfassung der Distanz(en) sowie einer 3D-Abbildung stehen verschiedene Radarbetriebsmodi zur Auswahl, die je nach Rahmenbedingung der Messung eingesetzt werden können. So kann jede Radarantenne kontinuierlich (Continuous Wave, CW) mit einer einzelnen Frequenz pro Radarantenne senden. Weiterhin kann ein Mehrwellenlängenverfahren eingesetzt werden, in welchem mehrere Einzelwellenlängen pro Radarantenne kontinuierlich gesendet werden (Multiple Continuous Wave, MCW). Es besteht auch die Möglichkeit eines frequenzmodulierten, kontinuierlichen Sendens pro Radarantenne (Frequency Modulated Continuous Wave, FMCW) oder die Nutzung der Technik des Time-Multiplexing der Sendesignale. Auch orthogonale Sendefrequenzformen zum parallelen Betrieb der Sende- und Empfangsantennen können eingesetzt werden. Zur weiteren Verbesserung der Positionsgenauigkeitsbestimmung und/oder der Umgebungsinteraktion können diese Radarbetriebsmodi auch kombiniert werden.

Für den Betrieb der Radarantennen zur hochgenauen Distanzbestimmung zwischen den Radarantennen und dem Objekt wird ein Radar basierend auf Hochfrequenztechnologie im Zentimeter-, Millimeter-, Mikrowellen- und/oder Terrahertzbereich eingesetzt. Dieses kann je nach Umwelt- und Szenenanforderungen ausgewählt und eingesetzt werden und je nach verwendetem Radarbetriebsmodus respektive Hochfrequenztechnologie und möglichem Miniaturisierungsgrad ein Hochfrequenzsystem pro Radarantenne oder - bei Einsatz mehrerer Radarantennen - auch ein Hochfrequenzsystem für den kohärenten Betrieb aller Radarantennen sein.

Die 3D-Abbildung der Szene kann wiederum mit unterschiedlichen Bildformierungstechniken erfolgen, wobei jeweils alle der oben genannten Radarbetriebsmodi eingesetzt werden können. Da mehrere Radarantennen vorhanden sind, kann eine Realapertur-Bildgebung durchgeführt werden. In Abhängigkeit der räumlichen Radarantennenpositionen werden hierzu alle Entfernungsmessungen in einer 3D-Karte aufgetragen und dargestellt. Bei einer ausreichenden Anzahl von Messpunkten liefert diese Technik interpretationsfähige Bilder. Weiterhin besteht die Möglichkeit einer Synthetikapertur-Bildgebung. Hierzu wird die Interaktionsvorrichtung vom Roboter gegenüber dem Objekt bewegt. Diese Bewegung der Radarantennen wird genutzt, um damit eine synthetische Apertur aufzuspannen und dann mit dem bekannten SAR-Prinzip (SAR: Synthetic Aperture Radar) eine Abbildung der Szene zu erzeugen. Dies erfordert zusätzlich eine hochgenaue Positionskenntnis der Interaktionsvorrichtung zu jedem Zeitpunkt bzw. der mit dem Roboter erzeugten Bewegung der Interaktionsvorrichtung. Diese Technik kann auch mit nur einer Radarantenne an der Interaktionsvorrichtung durchgeführt werden. Vorzugsweise werden jedoch beim vorgeschlagenen Verfahren und der zugehörigen Anordnung immer mehrere Radarantennen in bzw. an der Interaktionsvorrichtung eingesetzt. Eine weitere Möglichkeit der Erzeugung einer 3D-Abbildung der Szene besteht in der Nutzung der so genannten MIMO-Bildgebung (MIMO: Multiple-Input Multiple-Output). Hierzu werden ebenfalls mehrere Radarantennen benötigt, die beispielsweise nach dem kohärenten MIMO-Prinzip betrieben werden. Daraus kann dann mit Hilfe einer Auswerteelektronik, vorzugsweise als Teil der Elektronik zur Ansteuerung der Radarantennen, ein 3D-Abbild der Szene errechnet werden. Eine mechanische Bewegung der Interaktionsvorrichtung gegenüber dem Objekt ist dazu nicht erforderlich.

Das vorgeschlagene Verfahren wird mit einem mehrgliedrigen Greifwerkzeug als Interaktionsvorrichtung eingesetzt. Die einzelnen Glieder dieses Greifwerkzeuges sind relativ zueinander bewegbar, um das Objekt geeignet greifen zu können. In jedem dieser relativ zueinander bewegbaren Glieder ist dann wenigstens eine Radarantenne integriert oder an dem jeweiligen Glied angebracht, um aus den Radarsignalen der Radarantennen jeweils die Distanz jedes Gliedes zu dem Objekt bestimmen zu können. Für jede dieser Radarantennen wird eine Distanzbestimmung zum Objekt durchgeführt und danach entweder die Einzelinformation pro Radarantenne zur Positionierung des Greifwerkzeugs und der einzelnen Glieder des Greifwerkzeugs verwendet oder die zur Verfügung stehenden Messergebnisse partiell oder komplett zur Positionierung herangezogen. Die Anzahl der Radarantennen pro Element bzw. Glied des Greifwerkzeugs hängt vom jeweiligen Einsatzszenario und der geforderten Positioniergenauigkeit ab.

Die zur Durchführung des Verfahrens vorgeschlagene Anordnung umfasst mehrere Radarantennen, die in die Interaktionsvorrichtung integriert oder an der Interaktionsvorrichtung angebracht sind und wenigstens eine Elektronik, mit der die Radarantennen verbunden und zur Aussendung und zum Empfang von Radarsignalen ansteuerbar sind. Die Elektronik ist dabei so ausgebildet, dass sie die Radarantennen für die Positionierung der Interaktionsvorrichtung zur Aussendung und zum Empfang von Radarsignalen ansteuert, aus den empfangenen Radarsignalen die Distanzen der Radarantennen zu dem Objekt bestimmt und eine 3D-Abbildung der mit den mehreren Radarantennen erfassten Szene generiert. Diese Daten werden der Steuerung für den Roboter und/oder die Interaktionsvorrichtung bereitgestellt bzw. übermittelt, damit die Steuerung auf Basis dieser Daten die Interaktionsvorrichtung in der gewünschten Weise gegenüber dem Objekt positionieren kann. Die Anordnung zeichnet sich dadurch aus, dass die Interaktionsvorrichtung ein Greifwerkzeug mit mehreren relativ zueinander bewegbaren Gliedern ist, wobei in oder an jedem der zueinander bewegbaren Glieder des Greifwerkzeuges wenigstens eine der Radarantennen integriert oder angebracht ist. Die Elektronik ist dabei so ausgebildet, dass sie aus den empfangenen Radarsignalen jeweils die Distanz jedes Gliedes zu dem Objekt bestimmt.

Neben der Elektronik inklusive Hochfrequenztechnik für den Betrieb der Radarantennen muss die vorgeschlagene Anordnung auch eine Elektronik enthalten, welche die von den einzelnen Radarantennen stammenden Entfernungsmessungen aufarbeitet und für eine lokal richtige, dreidimensionale Zuordnung von Antennenposition und Entfernungsmessung sorgt. Daher müssen auch Winkelencoder im Greifwerkzeug vorhanden sein, welche die Bewegung der einzelnen Glieder untereinander hochgenau vermessen können. Die Elektronik gibt die zugeordneten Werte dann an die Steuerung des Roboters weiter. Die Elektronikanteile können dabei je nach Ausprägung des Roboters bzw. der Interaktionsvorrichtung unabhängig voneinander implementiert oder in einer gemeinsamen Elektronikeinheit vereint sein.

Das vorgeschlagene Verfahren und die zugehörige Anordnung kombinieren damit eine Distanzmessung mit einer 3D-Abbildung der Szene, jeweils ausgehend von der Interaktionsvorrichtung. Damit werden die hochgenaue Positionierung der Interaktionsvorrichtung gegenüber dem zu interagierenden Objekt und eine gleichzeitige 3D-Abbildung des gleichen Objekts erreicht und damit eine neue Stufe der Interaktion von Robotern ermöglicht. Umbauten in der Umgebung, in der die Roboter gemäß dem vorgeschlagenen Verfahren eingesetzt werden, sind hierzu nicht erforderlich. Die Nutzung der Radartechnik ermöglicht auch die Messfähigkeit durch optisch stark dämpfende Medien wie Nebel. Bisher als enorm schwierig wahrgenommene Messaufgaben wie die Interaktion mit zerbrechlichen Objekten in harschen Umgebungen werden mit dem vorgeschlagenen Verfahren und der zugehörigen Anordnung möglich.

Das vorgeschlagene Verfahren und die zugehörige Anordnung lassen sich einsetzen, um die Greifwerkzeuge hochgenau zum Greifen eines Objekts ansteuern zu können.

### Kurze Beschreibung der Zeichnungen

Das vorgeschlagene Verfahren sowie die zugehörige Anordnung werden nachfolgend anhand eines Ausführungsbeispiels in Verbindung mit der Zeichnung nochmals näher erläutert. Hierbei zeigen:
- Fig. 1: eine schematische Darstellung eines mehrgliedrigen Greifwerkzeugs mit integrierten Radarantennen im Querschnitt sowie
- Fig. 2: das Greifwerkzeug der Figur 1 in Draufsicht.

### Wege zur Ausführung der Erfindung

Das vorliegende Beispiel befasst sich mit der Nutzung des Verfahrens zur Positionierung eines mehrgliedrigen Greifwerkzeugs. In Zukunft werden immer mehr Roboter für unterschiedlichste Aufgaben entstehen und den Menschen im Alltag begleiten. Für hochpräzise Arbeiten, in denen die Funktionalität einer Hand als Greifwerkzeug notwendig ist, beispielsweise zum Greifen eines Glases, wird daher das Greifwerkzeug analog zur menschlichen Hand gestaltet. Im Folgenden werden das vorgeschlagene Verfahren und die zugehörige Anordnung anhand der Positionierung eines derartigen Greifwerkzeuges nochmals erläutert.

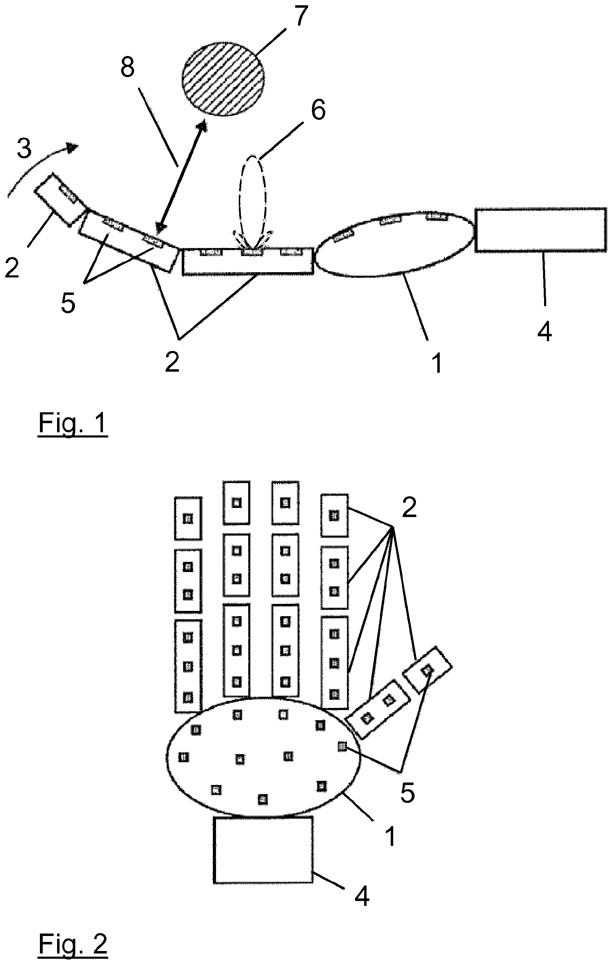

Jedes bewegliche oder starre Element des Greifwerkzeuges, welches für die Positionierung wichtig ist, im Fall einer Handnachbildung als Greifwerkzeug beispielsweise die Fingerelemente und der Handteller, wird mit einer oder mehreren Radarantennen ausgestattet. Jede dieser Radarantennen weist eine definierte Position im Element sowie eine definierte Strahlcharakteristik auf, so dass die geometrischen Verhältnisse der Antennenposition und Ausleuchtung der Szene für jede Radarantenne bekannt sind. Figur 1 zeigt hierzu im Querschnitt ein Beispiel für ein derartiges Greifwerkzeug mit beweglichen Gliedern bzw. Elementen, das einer Hand nachempfunden ist. In Figur 1 sind hierzu der Handteller 1 sowie die Fingerelemente 2 dargestellt, die jeweils gegeneinander beweglich sind und zu einer gegenseitigen Bewegung angesteuert werden können. Die Greifbewegung 3 ist durch den Pfeil angedeutet. Das Greifwerkzeug ist an einem Roboterarm befestigt, von dem lediglich das äußerste Armelement 4 in der Figur dargestellt ist. Hierbei kann es sich beispielsweise um einen Knickarmroboter handeln. In jedem der einzelnen beweglichen Elemente bzw. Glieder sind Radarantennen 5 integriert, wie dies in der Figur angedeutet ist. Diese Radarantennen 5 sind auf der Seite der Glieder angeordnet, zu der die Greifbewegung 3 erfolgt. Weiterhin zeigt die Figur an einer der Radarantennen 5 auch eine beispielhafte Strahlcharakteristik 6 der Radarantennen, die für jede der einzelnen Radarantennen 5 bekannt ist. Das zu greifende Objekt 7 ist in der Figur 1 ebenfalls schematisch dargestellt. Figur 2 zeigt eine Draufsicht auf die Greifseite des Greifwerkzeugs mit den unterschiedlichen Fingerelementen 2, dem Handteller 1, jeweils mit den integrierten Radarantennen 5, sowie dem Armelement 4 des Roboterarms.

Für jede der Radarantennen 5 wird eine Distanzbestimmung 8 zum Objekt 7 durchgeführt und danach entweder die Einzelinformation pro Radarantenne 5 zur Positionierung verwendet oder die zur Verfügung stehenden Messergebnisse partiell oder komplett zur Positionierung herangezogen.

Die Elektronik für den Betrieb der Radarantennen und die Distanzbestimmung ist in der Figur nicht dargestellt. Für die lokal richtige, dreidimensionale Zuordnung von Antennenposition und Distanzmessung benötigt die Elektronik auch die Information über die genaue gegenseitige Lage der einzelnen Glieder des Greifwerkzeugs. Hierzu sind an dem Greifwerkzeug Winkelencoder angeordnet, welche die Bewegung der Handelemente untereinander hochgenau vermessen können. Diese Daten sowie die gemessenen Entfernungen werden von der Steuerung des Roboters zur genauen Positionierung des Greifwerkzeugs und der einzelnen Glieder des Greifwerkzeugs verarbeitet.

Die Radaranordnung der Figuren 1 und 2 wird auch genutzt, um aus der Greifseite des Greifwerkzeugs heraus eine 3D-Abbildung des zu greifenden Objektes 7 bzw. der gesamten Szene, in welcher sich das Objekt 7 befindet, durchzuführen. Für die hierfür eingesetzten Bildformierungstechniken ist ebenfalls die hochgenaue Kenntnis der gegenseitigen Lage der einzelnen Handelemente respektive des gesamten Roboters erforderlich. Die entsprechende Elektronik zur Auswertung der Winkelencoder ist auch für diese Bildgebung erforderlich. Die dreidimensionale Abbildung der Szene ermöglicht dann die kollisionsfreie Bewegung des Greifwerkzeugs zum Greifen des Objekts.

Das Verfahren und die Anordnung bieten somit die Möglichkeit, lediglich unter Nutzung des minimalen Sichtbereiches vom Interaktionswerkzeug aus alle zur hochgenauen Positionierung und dreidimensionalen Abbildung notwendigen Informationen zu generieren. Das Verfahren zeichnet sich insbesondere dadurch aus, dass keine weiteren Sensoren im Umfeld des Roboters oder des Objektes benötigt werden.

### Bezugszeichenliste

- 1: Handteller des Greifwerkzeugs
- 2: Fingerelemente des Greifwerkzeugs
- 3: Greifbewegung
- 4: Armelement des Roboterarms
- 5: Radarantennen
- 6: Strahlcharakteristik einer Radarantenne
- 7: Objekt
- 8: Distanzbestimmung

## Patentansprüche

1. Verfahren zur Positionierung einer robotergeführten Interaktionsvorrichtung gegenüber einem Objekt, bei dem
- mehrere Radarantennen (5) so in die Interaktionsvorrichtung integriert oder an der Interaktionsvorrichtung angebracht werden, dass mit den Radarantennen (5) wenigstens ein Bereich eines Interaktionsraumes der Interaktionsvorrichtung abtastbar ist,
- die Radarantennen (5) zur Aussendung und zum Empfang von Radarsignalen angesteuert werden,
- aus den empfangenen Radarsignalen eine oder mehrere Distanzen der Radarantennen (5) zu dem Objekt (7) bestimmt und eine 3D-Abbildung einer mit den Radarantennen (5) erfassten Szene generiert wird, und
- die aus den empfangenen Radarsignalen bestimmten Distanzen und generierte 3D-Abbildung als Daten an eine Robotersteuerung übermittelt werden, die die Interaktionsvorrichtung auf Basis dieser Daten gegenüber dem Objekt (7) positioniert,
**dadurch gekennzeichnet,**
**dass** bei Nutzung eines mehrgliedrigen Greifwerkzeuges als Interaktionsvorrichtung in jedes oder an jedem der relativ zueinander bewegbaren Glieder (1, 2) des Greifwerkzeuges wenigstens eine Radarantenne (5) integriert oder angebracht wird und aus den empfangenen Radarsignalen jeweils die Distanz jedes Gliedes (1, 2) zu dem Objekt (7) bestimmt wird.

2. Verfahren nach Anspruch 1,
**dadurch gekennzeichnet,**
**dass** zwischen den Gliedern (1, 2) Winkelencoder eingesetzt werden, um die Lage der Glieder (1, 2) zueinander zu bestimmen, und das Greifwerkzeug auf Basis der gegenseitigen Lage der Glieder (1, 2), der aus den empfangenen Radarsignalen bestimmten Distanzen der Glieder (1, 2) zum Objekt (7) und der aus den empfangenen Radarsignalen generierten 3D-Abbildung zum Greifen des Objektes (7) angesteuert wird.

3. Verfahren nach Anspruch 1 oder 2,
**dadurch gekennzeichnet,**
**dass** die 3D-Abbildung durch eine MIMO-Bildgebung erzeugt wird.

4. Verfahren nach Anspruch 1 oder 2,
**dadurch gekennzeichnet,**
**dass** die 3D-Abbildung aus den mit den einzelnen Radarantennen (5) bestimmten Distanzen erzeugt wird.

5. Verfahren nach Anspruch 1 oder 2,
**dadurch gekennzeichnet,**
**dass** die 3D-Abbildung mittels SAR durch gesteuerte Bewegung der Interaktionsvorrichtung gegenüber dem Objekt (7) erzeugt wird.

6. Anordnung zur Positionierung einer robotergeführten Interaktionsvorrichtung gegenüber einem Objekt, mit
- mehreren Radarantennen (5), die so in die Interaktionsvorrichtung integriert oder an der Interaktionsvorrichtung angebracht sind, dass mit den Radarantennen (5) wenigstens ein Bereich eines Interaktionsraumes der Interaktionsvorrichtung abtastbar ist, und
- wenigstens einer Elektronik, mit der die Radarantennen (5) verbunden und zur Aussendung und zum Empfang von Radarsignalen ansteuerbar sind, wobei die Elektronik so ausgebildet ist, dass sie
-- die Radarantennen (5) für eine Positionierung der Interaktionsvorrichtung zur Aussendung und zum Empfang von Radarsignalen ansteuert,
-- aus den empfangenen Radarsignalen eine oder mehrere Distanzen der Radarantennen (5) zu dem Objekt (7) bestimmt,
-- eine 3D-Abbildung einer mit den Radarantennen (5) erfassten Szene generiert, und
-- die aus den empfangenen Radarsignalen bestimmten Distanzen und generierte 3D-Abbildung als Daten für eine Robotersteuerung bereitstellt, die die Interaktionsvorrichtung auf Basis dieser Daten gegenüber dem Objekt (7) positionieren kann,
**dadurch gekennzeichnet,**
**dass** die Interaktionsvorrichtung ein Greifwerkzeug mit mehreren relativ zueinander bewegbaren Gliedern (1, 2) ist, wobei in oder an jedem der zueinander bewegbaren Glieder (1, 2) des Greifwerkzeuges wenigstens eine der Radarantennen (5) integriert oder angebracht ist und die Elektronik so ausgebildet ist, dass sie aus den empfangenen Radarsignalen jeweils die Distanz jedes Gliedes (1, 2) zu dem Objekt (7) bestimmt.

7. Anordnung nach Anspruch 6,
**dadurch gekennzeichnet,**
**dass** das Greifwerkzeug Winkelencoder aufweist, mit denen eine relative Lage der Glieder (1, 2) zueinander erfassbar ist.

## Claims

1. Method for positioning a robot-guided interaction apparatus with respect to an object, in which
- a plurality of radar antennas (5) are integrated in the interaction apparatus or mounted on the interaction apparatus in such a manner that at least one region of an interaction space of the interaction apparatus can be scanned with the radar antennas (5),
- the radar antennas (5) are controlled to emit and to receive radar signals,
- one or more distances from the radar antennas (5) to the object (7) are determined from the received radar signals, and a 3-D image of a scene captured with the radar antennas (5) is generated, and
- the distances determined and the 3-D image generated from the received radar signals are communicated as data to a robot controller, which positions the interaction apparatus with respect to the object (7) on the basis of said data,
**characterized in that**
when a multi-segment gripping tool is used as the interaction apparatus, at least one radar antenna (5) is integrated in or mounted on each of the segments (1, 2) of the gripping tool that are movable relative to each other, and the distance from each segment (1, 2) to the object (7) is determined in each case from the received radar signals.

2. Method according to Claim 1,
**characterized in that**
angle encoders are used between the segments (1, 2) in order to determine the position of the segments (1, 2) relative to each other, and the gripping tool is actuated to grip the object (7) on the basis of the position of the segments (1, 2) relative to each other, the distances from the segments (1, 2) to the object (7) determined from the received radar signals, and the 3-D image generated from the received radar signals.

3. Method according to Claim 1 or 2,
**characterized in that**
the 3-D image is generated by MIMO imaging.

4. Method according to Claim 1 or 2,
**characterized in that**
the 3-D image is generated from the distances that are determined with the individual radar antennas (5).

5. Method according to Claim 1 or 2,
**characterized in that**
that the 3-D image is generated by SAR through controlled movement of the interaction apparatus with respect to the object (7).

6. Arrangement for positioning a robot-guided interaction apparatus with respect to an object, with
- a plurality of radar antennas (5) which are integrated in the interaction apparatus or mounted on the interaction apparatus in such a manner that at least one region of an interaction space of the interaction apparatus can be scanned with the radar antennas (5), and
- at least one electronic unit with which the radar antennas (5) are connected and can be activated for emitting and receiving radar signals, wherein the electronic unit is designed in such manner that it
-- actuates the radar antennas (5) to emit and to receive radar signals for positioning the interaction apparatus,
-- determines one or more distances from the radar antennas (5) to the object (7) from the received radar signals,
-- generates a 3-D image of a scene captured with the radar antennas (5), and
-- provides the distances determined and the 3-D image generated from the received radar signals as data to a robot controller, which is able to position the interaction apparatus with respect to the object (7) on the basis of said data,
**characterized in that**
the interaction apparatus is a gripping tool with several segments (1, 2) that are movable relative to each other, wherein at least one of the radar antennas (5) is integrated in or mounted on each of the segments (1, 2) of the gripping tool that are movable relative to each other, and the electronic unit is designed in such manner that it determines the distance of each segment (1, 2) from the object (7) from the received radar signals.

7. Arrangement according to Claim 6,
**characterized in that**
the gripping tool has angle encoders with which a position of the segments (1, 2) relative to each other can be captured.

## Revendications

1. Procédé de positionnement d'un dispositif d'interaction robotisé par rapport à un objet, dans lequel
- plusieurs antennes radar (5) sont intégrées au ou montées sur le dispositif d'interaction, en ce que avec les antennes radar (5) au moins une zone d'un espace d'interaction du dispositif d'interaction peut être balayée,
- les antennes radar (5) sont commandées en vue de la transmission et la réception des signaux radar,
- d'après les signaux radar reçus une ou plusieurs distances des antennes radar (5) par rapport à l'objet (7) est/sont déterminé(s) et une image 3D d'une scène capturée par les antennes radar (5) est générée, et
- les distances déterminées d'après les signaux radar reçus et de l'image 3D générée d'après les signaux radar reçus sont transmises en tant que données à une commande de robot, qui positionne le dispositif d'interaction sur la base de ces données par rapport à l'objet (7),
**caractérisé en ce que**
lors de l'utilisation d'un outil de préhension en plusieurs éléments, en tant que dispositif d'interaction, au moins une antenne radar (5) est intégrée à ou montée sur dans chacun ou sur chacun des éléments mobiles l'un par rapport à l'autre (1, 2) de l'outil de préhension et la distance de chaque élément (1, 2) à l'objet (7) est déterminée d'après les signaux radar reçus.

2. Procédé selon la revendication 1,
**caractérisé en ce que**
entre les éléments (1, 2) des codeurs angulaires sont utilisés pour déterminer la position des éléments (1, 2) les uns par rapport aux autres, et l'outil de préhension est commandé sur la base de la position mutuelle des éléments (1, 2), des distances déterminées d'après les signaux radar reçus des éléments (1, 2) par rapport à l'objet (7) et de l'image 3D générée d'après les signaux radar reçus pour saisir l'objet (7).

3. Procédé selon la revendication 1 ou 2,
**caractérisé en ce que**
l'image 3D est générée par imagerie MIMO.

4. Procédé selon la revendication 1 ou 2,
**caractérisé en ce que**
l'image 3D est générée d'après les distances déterminées avec les antennes radar individuelles (5).

5. Procédé selon la revendication 1 ou 2,
**caractérisé en ce que**
l'image 3D est générée au moyen de SAR par déplacement contrôlé du dispositif d'interaction par rapport à l'objet (7).

6. Dispositif de positionnement d'un dispositif d'interaction guidé par robot par rapport à un objet, comportant
- plusieurs antennes radar (5), qui sont intégrées dans le dispositif d'interaction ou montées sur le dispositif d'interaction de sorte qu'au moins une zone d'un espace d'interaction du dispositif d'interaction puisse être balayée avec les antennes radar (5), et
- au moins un système électronique, avec lequel les antennes radar (5) sont connectées et peuvent être commandées pour émettre et recevoir des signaux radar, dans lequel l'électronique est conçue de manière à
-- commander les antennes radar (5) pour positionner le dispositif d'interaction en vue de la transmission et la réception des signaux radar,
-- déterminer d'après les signaux radar reçus, une ou plusieurs distances des antennes radar (5) jusqu'à l'objet (7),
-- générer une image 3D d'une scène capturée avec les antennes radar (5) et
-- fournir en tant que données pour une commande de robot les distances déterminées d'après les signaux radar reçus et de l'image 3D générée d'après les signaux radar reçus, qui peuvent positionner le dispositif d'interaction sur la base de ces données par rapport à l'objet (7),
**caractérisé en ce que**
le dispositif d'interaction est un outil de préhension à plusieurs éléments (1, 2) déplaçables les uns par rapport aux autres, dans lequel au moins une des antennes radar (5) est intégrée à ou montée sur chacun des éléments (1, 2) de l'outil de préhension déplaçables l'un par rapport à l'autre, et l'électronique est conçue de manière à déterminer d'après les signaux radar reçus respectivement la distance de chaque élément (1,2) par rapport à l'objet (7) .

7. Dispositif selon la revendication 6,
**caractérisé en ce que**
l'outil de préhension comporte des codeurs angulaires avec lesquels une position relative des éléments (1, 2) les uns par rapport aux autres peut être détectée.
